# EUROPÄISCHE PATENTSCHRIFT

(11) **EP 2 782 765 B1**
(45) Veröffentlichungstag und Bekanntmachung des Hinweises auf die Patenterteilung: **02.12.2015**
(21) Anmeldenummer: 13799044.6
(22) Anmeldetag: 02.12.2013
(51) Int. Cl.: B42D 15/00, G02B 5/18, G07D 7/00, B42D 25/00, B42D 25/29

(54) **SICHERHEITSEINRICHTUNG**
SECURITY DEVICE
DISPOSITIF DE SÉCURITÉ

(30) Priorität: 04.12.2012 EP 12195437
(43) Veröffentlichungstag der Anmeldung: 01.10.2014
(73) Patentinhaber: Sectago GmbH, 66123 Saarbruecken (DE)
(72) Erfinder: ROGIN, Peter, 66123 Saarbrücken (DE); KOCH, Markus, 66953 Pirmasens (DE); SEILS, Frank, 79692 Kleines Wiesental (DE)
(74) Vertreter: WSL Patentanwälte Partnerschaft mbB
(86) Internationale Anmeldenummer: PCT/EP2013/075244
(87) Internationale Veröffentlichungsnummer: WO 2014/086715

(56) Entgegenhaltungen:
- EP-A1- 2 447 744
- WO-A1-94/28444
- WO-A1-95/02200

## Beschreibung

Die Erfindung betrifft eine Sicherheitseinrichtung zur Verbesserung der Fälschungssicherheit von schützenswerten Artikeln, insbesondere Originalartikeln wie beispielsweise Produkte, Marken, Eintrittskarten und Dokumente, insbesondere von Hochsicherheitsdokumenten wie beispielsweise Personaldokumenten und Zahlungsmitteln.

Bei Hochsicherheitsdokumenten, insbesondere bei Personaldokumenten, wie Reisepässen, Personalausweisen, Führerscheinen und dgl. sowie Zahlungsmitteln, wie Kreditkarten, Geldscheinen und dgl. sind eine Vielzahl von Sicherheitseinrichtungen vorgesehen. Hierbei handelt es sich beispielsweise um das Vorsehen von durch das menschliche Auge sichtbaren Sicherheitseinrichtungen, wie Hologramme. Ferner sind für das menschliche Auge nicht sichtbare oder nur bei speziellem Licht sichtbare Sicherheitseinrichtungen vorgesehen, die beispielsweise durch in das Hochsicherheitsdokument eingebrachte Farbpigmente erzeugt sind.

WO 94/28444 A1 und WO 95/02200 A1 beschreiben die Herstellung und Funktion diffraktiver Sicherheitsmerkmale, die durch die Kombination verschiedener konventioneller diffraktiver Sicherheitsmerkmale wie Pixelgramm, Kinegramm, mathematisches Hologramm und dergleichen entstehen. Im Falle von WO 95/02200 A1 wird die Kombination durch die Überlagerung der zugehörigen Gitterstrukturen in mindestens einem Teil der Fläche des kombinierten Sicherheitsmerkmals erzeugt. WO 94/28444 A1 bezieht sich dagegen auf ein pixeliertes Sicherheitsmerkmal, dessen einzelne Pixel in Subpixel unterteilt sind, wobei jedes einzelne dieser Subpixel gemäß genau einem der ursprünglichen Sicherheitsmerkmale ausgestaltet ist. Die Gesamtheit der Subpixel wird damit in Gruppen von Subpixeln unterteilt, wobei jede Gruppe genau eines der ursprünglichen Sicherheitsmerkmale darstellt. Die Anordnung der Subpixel einer Gruppe folgt dabei einem regelmäßigen Muster, da innerhalb der übergeordneten Pixel des kombinierten Sicherheitsmerkmals die Zuordnung der Subpixel zu der jeweiligen Gruppe gleich bleibt.

Sowohl WO 94/28444 A1 als auch WO 95/02200 A1 beschreiben damit Möglichkeiten, verschieden diffraktive Sicherheitsmerkmale derart zu überlagern, dass der Betrachter diese Merkmale auf derselben Fläche wahrnehmen kann, wobei die Sichtbarkeit der einzelnen Merkmale durch die Kombination von Beleuchtungs- und Betrachtungswinkeln beeinflusst wird.

EP 2 447 744 A1 beschreibt die Herstellung und Funktion eines pixelierten diffraktiven "Zero-Order"-Filterelements, welches durch einen mehrschichtigen Aufbau erzeugt wird. Hierbei wird eine diffraktiv strukturierte, hochbrechende Schicht zwischen niedrigbrechenden Schichten eingebettet. Die hochbrechende Schicht dient zugleich als Wellenleiter, welcher das einfallende Licht verteilt. Die Gitterstrukturen auf der Oberseite der hochbrechenden Schicht dienen zum einen der Einkopplung in den Wellenleiter und zum anderen der spektralen Zerlegung des einfallenden Lichtes. Somit kann gezielt das abgestrahlte Spektrum des Elements bestimmt werden. Durch die Unterteilung der einzelnen Pixel in Sub-Pixel können in den einzelnen Pixeln Mischfarben bzw. weißes Licht erzeugt werden. Ein derartiges Element dient zur Erzeugung besonderer, unter anderem auch winkelabhängiger Farbeffekte, die jedoch stets am selben Ort in der Fläche des Elementes sichtbar sind.

Aus WO 2010/115936 ist eine Sicherheitseinrichtung, die insbesondere für Zahlungsmittel geeignet ist, bekannt. Diese weist eine Reflektionsschicht, wie eine Aluminiumfolie, auf, auf deren Oberseite eine Vielzahl diffraktiver Oberflächenelemente angeordnet ist. Die einzelnen Oberflächenelemente weisen eine sinusförmige Oberflächenstruktur zur Erzeugung eines Beugungsgitters auf. Die einzelnen Oberflächenelemente sind hierbei derart ausgebildet, dass einfallendes Licht derart gebeugt wird, dass für den Beobachter ein Eindruck ähnlich des natürlichen Asterismus entsteht. Ein Beobachter erkennt somit beispielsweise ein sternförmiges Symbol, das in einer Bildebene um sich selbst rotiert.

Trotz der bereits bestehenden Vielzahl von Sicherheitseinrichtungen besteht weiterhin das Bedürfnis der Entwicklung einer möglichst fälschungssicheren Sicherheitseinrichtung, die maschinell oder auch vom bloßen Auge erkannt werden kann.

Aufgabe der Erfindung ist es, eine derartige Sicherheitseinrichtung zu schaffen.

Die Lösung der Aufgabe erfolgt erfindungsgemäß durch eine Sicherheitseinrichtung zur Verbesserung der Fälschungssicherheit von Artikeln gemäß Anspruch 1.

Gemäß einem Aspekt der Erfindung weist die Sicherheitseinrichtung auf einem Trägerelement eine Vielzahl diffraktiver Oberflächenelemente auf. Die einzelnen Oberflächenelemente können unterschiedliche Grundflächen, wie Kreise, Vielecke etc. oder Kombinationen aufweisen. An ihrer Oberseite, an der das Licht gebeugt wird, ist eine Oberflächenstruktur vorgesehen. Bei der Oberflächenstruktur handelt es sich insbesondere um ein Beugungsgitter mit einem beliebigen, beispielsweise sinusförmigen, rechteckigen oder dreieckigen Oberflächenprofil. Diese Beugungsgitter können transparent auf einem transparenten oder reflektierenden Trägerelement oder auch selbst reflektierend ausgebildet sein.

Gemäß einem Aspekt der Erfindung bilden jeweils mehrere, vorzugsweise über die gesamte Fläche verteilt angeordnete Oberflächenelemente eine Oberflächenelementen-Gruppe. Die Oberflächenstrukturen der einzelnen Oberflächenelemente einer derartigen Gruppe sind derart aufeinander abgestimmt, dass unter einem definierten Winkel einfallendes Licht in einem Punkt fokussiert wird. Hierbei kann die Abstimmung der einzelnen Oberflächenelemente sowohl in Ihrer Oberflächenstruktur als auch in Ihrer Ausrichtung erfolgen. Aufgrund einer derartigen Ausgestaltung einer Oberflächenelementen-Gruppe kann der Punkt in einem Beobachtungsraum dargestellt werden. Bei dem Beobachtungsraum kann es sich in vorzugsweiser Ausführungsform um eine Beobachtungssphäre handeln, wobei es ferner vorteilhaft ist, dass der Punkt in dem gesamten Beobachtungsraum bzw. der gesamten Beobachtungssphäre dargestellt wird. Nachfolgend wird die Erfindung anhand der Ausführungsform des Beobachtungsraums als Beobachtungssphäre beschrieben.

Die Darstellung eines Punktes erfolgt bspw. bei Änderung des Lichts-/Einfallswinkels und/oder eines Beobachtungswinkels eines Beobachters in der Beobachtungssphäre durch dieselbe Oberflächenelemente-Gruppe. Hier bewirkt in vorteilhafter Ausführungsform der Erfindung eine Veränderung des Einfallswinkels des Lichts und/oder des Beobachtungswinkels des Beobachters für den Beobachter eine Bewegung des Punktes in der Beobachtungssphäre. Der Beobachter nimmt eine entsprechende Bewegung wahr. Insbesondere falls es sich bei der Veränderung des Einfallswinkels des Lichts und/oder des Beobachtungswinkels des Beobachters um eine gleichförmige Veränderung handelt, so bewirkt dies für den Beobachter eine kontinuierliche Bewegung des Punktes.

Während gemäß WO 94/28444 A1 Gruppen von Subpixeln bei sich ändernden Licht- und/ oder Beobachtungswinkeln zu jeweils unterschiedlichen Bildinformationen/ Merkmalen zusammengeführt werden, erzeugen die Oberflächenelementen-Gruppen der erfindungsgemäßen Sicherheitseinrichtung jeweils ortsverschiedene Abbildungen desselben Punktes des darzustellenden Symbols. Der Beobachter nimmt somit eine entsprechende Bewegung des Symbols wahr.

Zur Darstellung eines Symbols können mindestens zwei, insbesondere mehrere Punkte verwendet werden. Gemäß diesem Aspekt der Erfindung können somit mehrere Oberflächenelementen-Gruppen vorgesehen sein, wobei durch jede Oberflächenelementen-Gruppe ein Punkt des Symbols dargestellt wird. Bei dem dargestellten Symbol kann es sich um ein beliebiges Symbol, insbesondere ein geometrisches Symbol, wie ein Kreis, ein Smiley oder auch um einzelne Buchstaben oder Zahlen aber auch um ein komplexes Logo sowie um Kombinationen solcher Symbole handeln.

Ein Beobachter sieht nun nur das Licht, das in seine Richtung gelenkt wird. Aus der Vielzahl der Oberflächenelemente einer Gruppe sind damit für ihn nur diejenigen sichtbar, die sich entlang seiner Blickrichtung aus der Projektion des Fokuspunktes in der Bildebene in die Fläche der Sicherheitseinrichtung ergeben. Die Gesamtheit der aus der jeweiligen Blickrichtung sichtbaren Oberflächenelemente aus allen Gruppen entspricht dem gemäß der Projektion des ganzen Symbols in diese Fläche. Da die Projektionsrichtung der Blickrichtung entspricht, ändert sich die Position des sichtbaren Symbols mit der Position des Beobachters relativ zu der Sicherheitseinrichtung. Sowohl bei einer Änderung des Einfallswinkels des Lichts als auch bei einer Änderung des Beobachtungswinkels des Beobachters wird somit vom Beobachter eine Bewegung des Symbols wahrgenommen. Dies erfolgt auch wenn das Trägerelement im Raum bewegt wird, da dies einer Kombination der Veränderung des Lichteinfallswinkels und des Beobachtungswinkels entspricht.

Insbesondere sind durch die Veränderung des Einfallswinkels des Lichts und/oder des Beobachtungswinkels des Beobachters für den Beobachter weniger und/oder andere zusätzliche Oberflächenelemente derselben Gruppe sichtbar. Somit wird der Punkt in der Beobachtungssphäre bei Veränderung des Einfallswinkels des Lichts und/oder des Beobachtungswinkels des Beobachters durch weniger und/oder andere zusätzliche Oberflächenelemente derselben Gruppe dargestellt. Hierdurch wird von einem Beobachter eine Bewegung des einen Punkts im Beobachtungsraum wahrgenommen. Es handelt sich dabei nicht um eine scheinbare Bewegung, erzeugt durch die Überlagerung mehrerer ähnlicher aber nicht exakt gleicher Bilder. Vielmehr wird durch eine Gruppe von Oberflächenelementen eine ortsveränderliche Abbildung ein und desselben dargestellten Punktes erzeugt. Dabei ist das Symbol an sich als Summe aller dargestellten Punkte unveränderlich, kann also nicht abgeändert werden. Lediglich die Lage des Symbols innerhalb des Beobachtungsraums wird durch die Veränderung des Einfallswinkels des Lichts und/oder des Beobachtungswinkels des Beobachters verändert. Dabei sind für den Beobachter bei einer Veränderung des Einfallswinkels des Lichts und/oder des Beobachtungswinkels weniger Oberflächenelemente, dieselben Oberflächenelemente, insbesondere bei kleiner Veränderung des Einfallswinkels des Lichts und/oder des Beobachtungswinkels, weitere Oberflächenelemente oder teilweise bzw. vollständig andere Oberflächenelemente derselben Gruppe sichtbar.

Für diesen Beobachter bewegt sich das Symbol vorteilhafterweise entlang einer Bahn. Diese Bahn ist in besonders vorteilhafter Ausführungsform gekrümmt.

Durch eine vorteilhafte gleichmäßige Verteilung der Oberflächenelemente jeder Gruppe über die gesamte Fläche der Sicherheitseinrichtung wird erreicht, dass das Symbol aus jeder Blickrichtung innerhalb eines großen Blickwinkelbereichs sichtbar bleibt und sich bei insbesondere gleichförmiger Änderung des Blickwinkels innerhalb dieses Bereichs insbesondere kontinuierlich bewegt.

Ändert sich der Lichteinfallswinkel, so ändert sich auch die Position des durch die Oberflächenelemente einer Gruppe erzeugten Fokuspunktes und damit auch die Position des dargestellten Symbols. Auch hierdurch entsteht für den Beobachter insbesondere bei gleichförmiger Änderung des Lichteinfallswinkels der Eindruck einer kontinuierlichen Bewegung. Die wahrgenommene Bewegung entsteht als Summe der Einflüsse von Änderungen des Lichteinfallswinkels und des Beobachtungswinkels.

Des Weiteren gelten die oben aufgeführten Einflüsse auch in Kombination miteinander, wie z.B. bei Drehung und /oder Kippung des Trägerelements. Bei den oben genannten Bewegungen der Symbole entsteht der Eindruck einer Rotation der Symbole um einen virtuellen Punkt bzw. der Translation entlang einer Linie.

Durch die Verwendung von Beugungsgittern treten im allgemeinen Fall mehrere Beugungsordnungen auf, deren Intensitätsverhältnis durch die detaillierte Ausführung der Oberflächenstruktur bestimmt wird. Die verschiedenen Beugungsordnungen fokussieren das einfallende Licht in unterschiedliche Bildebenen, so dass mehrere Exemplare des dargestellten Symbols mit jeweils unterschiedlichem Bewegungsmuster sichtbar werden. Eine bevorzugte Ausführungsform zeigt eine starke Hervorhebung eines Exemplars gegenüber allen anderen. Dies kann beispielsweise durch eine geeignete Asymmetrie der Gitterstruktur erreicht werden.

In einer anderen vorteilhaften Ausführungsform werden im Wesentlichen zwei gleich helle Exemplare des Symbols mit entgegengesetztem Bewegungsmuster gezeigt. Diese nähern sich umso mehr aneinander an, je kleiner der Ablenkwinkel wird. Der Ablenkwinkel ist dabei die Abweichung zwischen der Richtung des Beobachters und der Richtung, entlang der sich das Licht im Falle einer direkten Transmission oder Reflexion (je nach Ausführung des Elements) ausbreiten würde. Dies kann beispielsweise durch die Unterdrückung höherer Beugungsordnungen erreicht werden, z.B. durch die Anpassung des Gitterprofils.

Gemäß einem weiteren Aspekt der Erfindung ist das angezeigte Symbol innerhalb eines weiten Blickwinkelbereichs sichtbar von insbesondere mehr als 60° und besonders vorteilhaft mehr als 90°. Hierdurch ist die Beobachtungssphäre definiert. Dies erfordert einen großen Variationsbereich in der Ausführung der Oberflächenstrukturen, insbesondere kann die Orientierung der Oberflächenstrukturen jeden beliebigen Winkel in der Trägerelementfläche annehmen. Ebenso ist eine große Variation der Gitterkonstante notwendig, insbesondere hierfür ist die gleichzeitige Verwendung von sehr kleinen und großen Gitterkonstanten erforderlich. Vorteilhaft liegt der Bereich der gleichzeitig angewendeten Gitterkonstanten zwischen ≤ 500nm (≥ 2000 Linien/mm) und ≥ 1500nm (≤ 666 Linien/mm), besonders vorteilhaft zwischen ≤ 300nm (≥ 3333 Linien/mm) und ≥ 5000nm (≤ 200 Linien/mm). Vorteilhaft ist es, das Größenverhältnis der größten zu der kleinsten Gitterkonstanten an den Oberflächenstrukturen in einem Verhältnis von mindestens 3:1 und besonders vorteilhaft mindestens 10:1 auszugestalten.

Des Weiteren ist es vorteilhaft, dass die Oberflächenelemente derart ausgebildet sind, dass das Symbol jeweils von weniger als 10%, insbesondere weniger als 5% der auf dem Trägerelement vorgesehenen Oberflächenelemente erzeugt wird.

Vorteilhafterweise ist die auf dem Trägerelement strukturierte Fläche zu mindestens 10%, insbesondere mindestens 30% und besonders vorteilhaft mindestens 50% mit Oberflächenelementen bedeckt. Durch derartige Füllfaktoren der Fläche mit Oberflächenelementen kann ein gut sichtbares Symbol mit einer ausreichenden Helligkeit erzeugt werden, so dass das Symbol insbesondere vom menschlichen Auge ohne Hilfsmittel erkannt werden kann.

Die Sicherheitseinrichtung gemäß Aspekten der Erfindung kann transparent, reflektiv oder auch semi-reflektiv, d.h. halbdurchlässig für Licht, ausgeführt werden. Die transparente Ausführung kommt insbesondere dann zur Anwendung, wenn die Sicherheitsprüfung des zu schützenden Artikels mittels Durchsicht erfolgen soll und der Artikel selbst zumindest teilweise lichtdurchlässig ist.

Eine oder mehrere Seiten der Sicherheitseinrichtung gemäß Aspekten der Erfindung können derart ausgeführt sein, dass sie auftreffendes Licht reflektieren. Hierzu kann beispielsweise das Trägerelement an einer Unterseite und/oder einer Oberseite und/oder die Oberflächenelemente eine lichtreflektierende Schicht aufweisen. Beispielsweise kann es sich hierbei jeweils um eine Schicht aus einem Metall, wie bspw. Aluminium, Silber, Kupfer, Gold oder Chrom handeln. Selbstverständlich sind auch Metalllegierungen und/oder Kombinationen unterschiedlicher Metalle geeignet. Besonders geeignet ist das Vorsehen einer Aluminiumschicht. Insbesondere bei Ausführung mit lichtreflektierenden Schichten an mindestens zwei Seiten ist es vorteilhaft, dass mindestens eine dieser Schichten halbdurchlässig ausgeführt ist. Das Vorsehen reflektierender Schichten ist insbesondere vom Anwendungsfall der Sicherheitseinrichtung abhängig. So sind Reflektionsschichten bei der Sicherheitseinrichtung insbesondere dann erforderlich, wenn die Sicherheitsprüfung des zu schützenden Artikels mittels Aufsicht erfolgen soll und auftreffendes Licht durch diesen Artikel selbst nicht oder ungenügend reflektiert wird.

Zur Herstellung der Oberflächenelemente ist es möglich auf dem Trägerelement einen Lack aufzubringen und die einzelnen Oberflächenelemente, insbesondere die Oberflächenstruktur der Oberflächenelemente über ein Abformelement herzustellen. Anschließend erfolgt ein Aushärten des Lackes, vorteilhafterweise mittels UV-Licht und/oder Wärme. Die Lackschicht hat nach dem Abformen der Oberflächenelemente vorteilhaft eine Dicke von 0,5 bis 300 µm, besonders vorteilhaft 0,8 bis 50 µm und insbesondere 1 bis 10 µm. Vorteilhaft weist das Trägermaterial und/oder die Oberflächenelemente einen Polymerwerkstoff auf oder ist aus Polymer hergestellt.

Die Herstellung der Oberflächenelemente kann derart erfolgen, dass das Trägerelement aus einem thermoplastischen Material besteht bzw. thermoplastisches Material aufweist und die Strukturierung der einzelnen Oberflächenelemente von einem Abformelement auf das thermoplastische Material übertragen wird. Insbesondere kann dies mittels Prägeverfahren erfolgen.

Zur Erzeugung der die Sicherheitseinrichtung ausbildenden diffraktiven Oberflächenelemente werden zunächst insbesondere mit Hilfe von Datenverarbeitungsprogrammen Informationen zur Ausgestaltung dreidimensionaler Oberflächenstrukturen auf einer Vielzahl von Oberflächenelementen generiert. Dies erfolgt dadurch, dass wie vorstehend anhand der Sicherheitseinrichtung beschrieben, Oberflächenelementen-Gruppen aus mehreren Oberflächenelementen gebildet werden und die Oberflächenstrukturen und die Ausrichtung der Oberflächenelementen-Gruppen derart aufeinander abgestimmt wird, dass die Oberflächenelementen-Gruppen in einem Beobachtungsraum einen Punkt des darzustellenden Symbols abbilden. Ferner werden weiter Informationen generiert, durch die mehrere Oberflächenelementen-Gruppen derart eingerichtet werden, dass sie jeweils einen Punkt abbilden, sodass sich das darzustellende Symbol aus der Summe aller von den Oberflächenelementen-Gruppen dargestellten Punkte zusammensetzt. Die Vielzahl an diffrativen Oberflächenelementen mit dreidimensionalen Oberflächenstrukturen werden zur Herstellung der Sicherheitseinrichtung auf einem Trägerelement auf Basis der generierten Informationen angeordnet.

Besonders vorteilhaft ist es, die erfindungsgemäße Sicherheitseinrichtung auf oder in Zahlungsmitteln, wie Banknoten und dergleichen vorzusehen. Auch andere Hochsicherheitsdokumente wie Kreditkarten, Reisepässe, Personalausweise, Führerscheine, Sozialversicherungskarten etc. können zur einfachen Überprüfung, ob es sich um einen originalen Artikel oder eine Fälschung handelt, mit der Sicherheitseinrichtung gemäß Aspekten der Erfindung ausgerüstet sein. Diese weist insbesondere den Vorteil auf, dass sie von einem Beobachter ohne die zu Hilfenahme von besonderen Leseeinrichtungen oder anderen Hilfsmittel sichtbar ist.

Auch auf Dokumenten, wie Anteilsscheinen, Steuerbanderolen, Eintrittskarten, Passierscheinen etc., ist das Vorsehen einer Sicherheitseinrichtung gemäß Aspekten der Erfindung vorteilhaft. Dies gilt insbesondere auch für Produkte und Marken, wie Medikamente, Spirituosen, Tabakwaren, Ersatzteile, Luxusgüter etc.

Des Weiteren ist die Kombination mit einem oder mehreren weiteren, Sicherheitsmerkmalen möglich, beispielsweise mit einem Hologramm und/oder maschinenlesbaren Sicherheitsmerkmalen.

Nachfolgend wird die Erfindung anhand einer bevorzugten Ausführungsform unter Bezugnahme auf die anliegenden Zeichnungen näher erläutert.

Es zeigen:
- Fig. 1: eine schematische Seitenansicht eines Ausschnitts einer Ausführungsform einer erfindungsgemäßen Sicherheitseinrichtung,
- Fig. 2: eine schematische Seitenansicht eines Ausschnitts einer weiteren Ausführungsform einer erfindungsgemäßen Sicherheitseinrichtung,
- Fig. 3: eine schematische Draufsicht einer Prinzipskizze der erfindungsgemäßen Sicherheitseinrichtung,
- Fig.4: eine schematische Draufsicht einer Prinzipskizze einer erfindungsgemäßen Sicherheitseinrichtung, wobei zur Verdeutlichung Oberflächenelementen-Gruppen durch Ziffern bezeichnet sind,
- Fig. 5: eine schematische perspektivische Prinzipskizze einer erfindungsgemäßen Sicherheitseinrichtung,
- Fig. 6: eine schematische Darstellung der sichtbaren Oberfilächenelemente einer ausgewählten Gruppe und
- Fig.7: eine schematische Darstellung der vom Beobachter wahrgenommenen Symbole bei unterschiedlichen Winkeln.

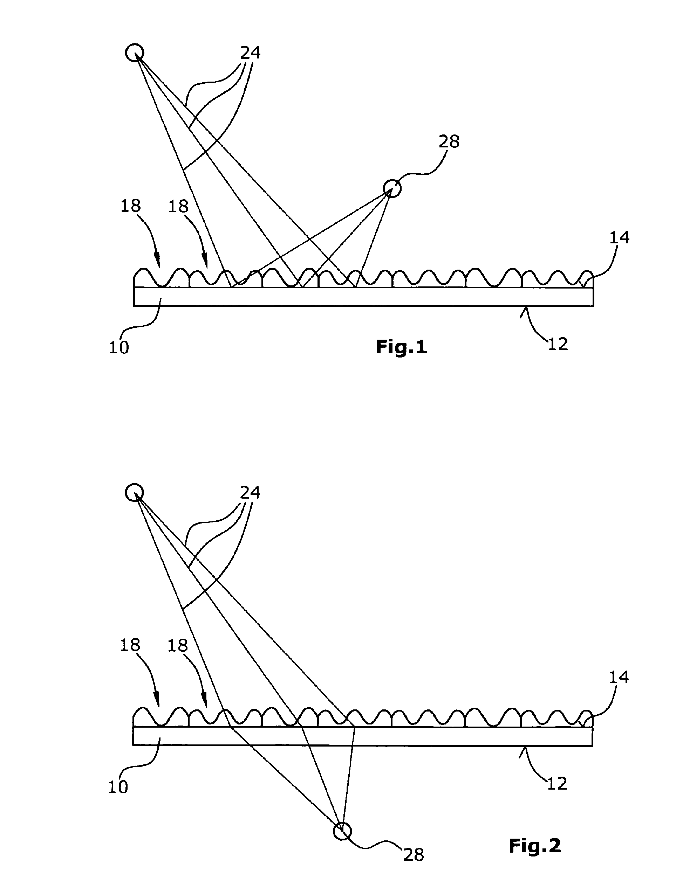

Die erfindungsgemäße Sicherheitseinrichtung weist im ersten dargestellten Ausführungsbeispiel (Fig. 1) ein Lichtreflektionselement 10 auf, bei dem es sich beispielsweise um eine Metallfolie oder ein Trägerelement aus beispielsweise Polymer, Papier und dgl. mit einer aufgebrachten Metallschicht, beispielsweise aus aufgedampftem Aluminium handelt. Das Lichtreflektionselement 10 ist beispielsweise mit einer Unterseite 12 auf einem zu sichernden Produkt, wie einer Kreditkarte, einem Geldschein oder dergleichen angeordnet. Ist das zu sichernde Produkt ganz oder teilweise transparent, ist eine weitere Ausführung des Lichtreflektionselements 10 beispielsweise derart, dass es mit einer Oberseite 14 zur Produktseite hin angeordnet ist. An einer Oberfläche 14 des Lichtreflektionselements sind eine Vielzahl von diffraktiven Oberflächenelementen 18 angeordnet. Die einzelnen Oberflächenelemente 18 sind als Beugungsgitter ausgebildet. Die einzelnen Oberflächenelemente können beispielsweise in einem Prozessschritt hergestellt werden, indem ein Lack auf die Oberfläche 14 eines Trägerelements 10 aufgetragen und über ein Abformelement strukturiert wird. Hierbei wird vorteilhaft ein Lack verwendet, der durch UV-Strahlung oder Wärmeeinwirkung aushärtbar ist. Hierbei weist die ausgehärtete Lackschicht nach dem Ausformen der Oberflächenelemente 18 vorteilhaft eine Dicke von 0,8 - 50 µm auf. Des Weiteren können die einzelnen Oberflächenelemente beispielsweise in einem Prozessschritt hergestellt werden, indem das Lichtreflektionselement 10 aus einem thermoplastischen Trägerelement besteht, in das die Oberflächenelemente 18 über ein Abformelement beispielsweise mittels Prägeverfahren direkt strukturiert werden. In letztgenanntem Fall bestünde, anders als in Fig.1 schematisch dargestellt, nicht zwangsläufig eine Grenzfläche 14 zwischen dem Lichtreflektionselement 10 und den Oberflächenelementen 18.

Einfallende Lichtstrahlen 24 werden, nachdem ggf. beim Eintreten in die Lackschicht bzw. das thermoplastische Trägerelement bereits eine Beugung erfolgte, an der Oberfläche 14 des Lichtreflektionselements 10 reflektiert. Beim Austreten aus den Oberflächenelementen werden die Lichtstrahlen durch das an der Außenfläche der einzelnen vorgesehene Beugungsgitter derart gebeugt, dass sie sich in einem gemeinsamen Punkt 28 treffen. Die als Linien dargestellten Strahlen sind vereinfacht dargestellt, sodass lediglich die Reflektion an der Oberfläche 14 und nicht die in bzw. an den Oberflächenelementen 18 auftretende Beugung dargestellt ist.

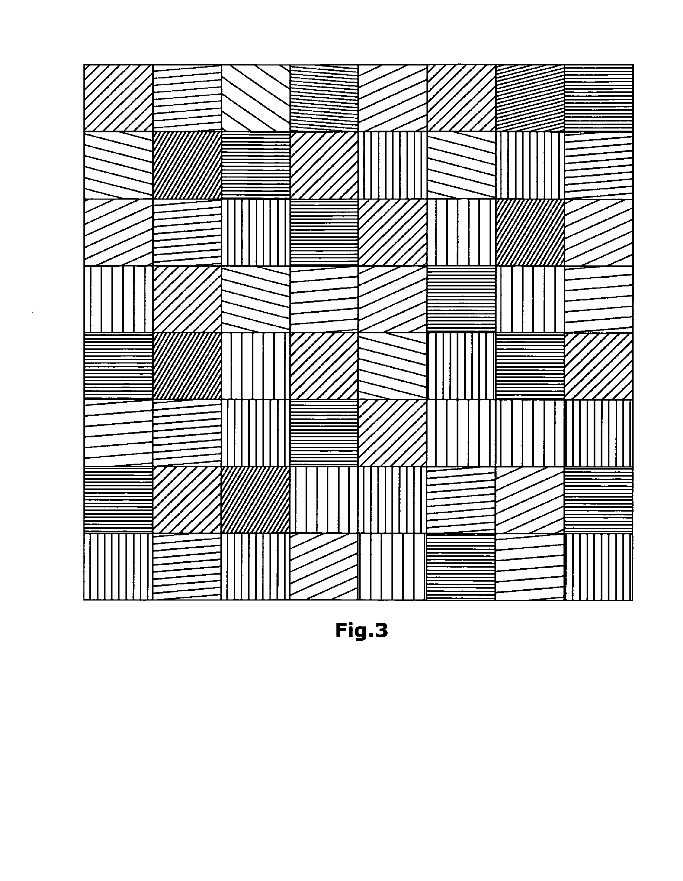

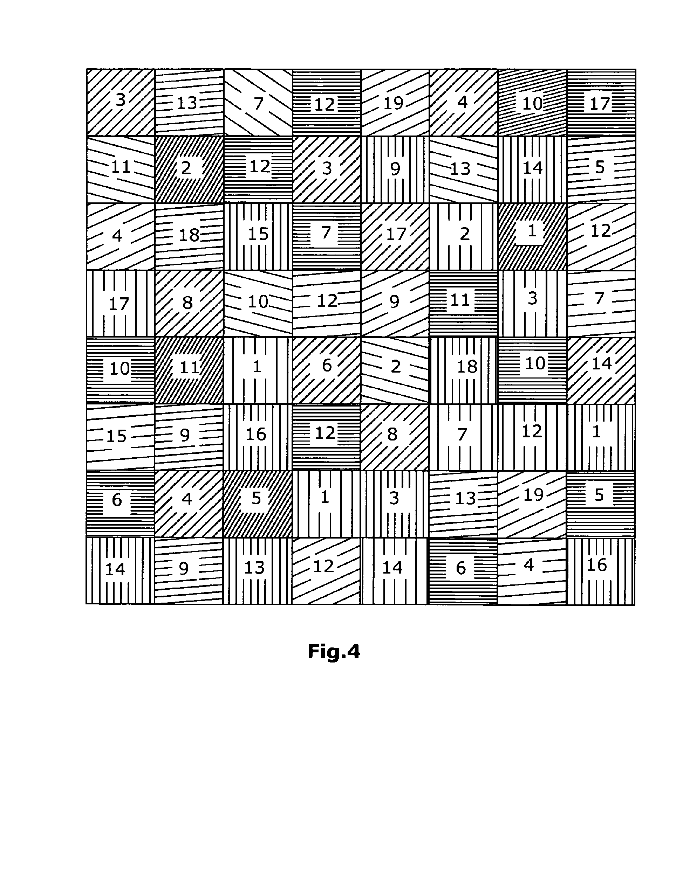

Wie nachstehend insbesondere anhand der Figuren 3 und 4 erläutert, erfolgt durch eine Gruppe mehrerer einzelner Oberflächenelemente 18 die Darstellung eines Punktes 28. Die Darstellung des sich im Raum bewegenden Punkts 28 erfolgt aufgrund der Änderung des Lichteinfalls- und/oder Beobachtungswinkels stets durch dieselbe Oberflächenelementen-Gruppe. Die Darstellung eines Symbols erfolgt somit durch Darstellung mehrerer Punkte, sodass auf dem Trägerelement 10 mehrere Oberflächenelementen-Gruppen entsprechend der Anzahl der darzustellenden Punkte des Symbols angeordnet sind.

Anstelle des Vorsehens einer reflektiv ausgeführten Sicherheitseinrichtung kann diese auch mittels eines transparenten Trägerelementes durchsichtig ausgeführt sein (Fig. 2). Die Strahlen 24 treten somit durch die Oberflächenelemente 18 und das Trägerelement 10 hindurch, wobei, wie anhand von Fig. 1 erläutert, durch die Gruppe an Oberflächenelementen 18 ein Punkt 28 im Raum dargestellt wird.

Die einzelnen Oberflächenelemente 18 weisen Beugungsgitter auf, wobei diese in den Figuren 1 und 2 nur schematisch dargestellt sind.

In diesem Ausführungsbeispiel der Erfindung weist die Sicherheitseinrichtung auf einem reflektierenden oder transparenten Trägerelement eine Vielzahl von Oberflächenelementen 18 auf. Die einzelnen Oberflächenelementen-Gruppen sind aus mehreren Oberflächenelementen 18 zusammengesetzt, die unregelmäßig auf dem Trägerelement verteilt sind. In den Figuren 3 und 4 ist die Zusammensetzung der Oberflächenelementen-Gruppe als Beispiel dargestellt. Aus Fig. 3 ergibt sich ein Beispiel einer schematischen Draufsicht einer Vielzahl als Quadrate dargestellter Oberflächenelemente, in welchen schematisch unterschiedliche Gitterstrukturen durch Linien dargestellt sind. Die einzelnen Oberflächenelemente weisen Gitterstrukturen mit Gitterkonstanten im Bereich von ≤ 500 nm bis ≥ 1500 nm, besonders bevorzugt von ≤ 300 nm bis ≥ 5000 nm auf. In Fig. 3 weisen einige Oberflächenelemente identische Strukturen auf. Aus Fig. 4 ergibt sich sodann ein Beispiel, welche Oberflächenelemente 18 zu Oberflächenelementen-Gruppen zusammengefasst sind. Zur Veranschaulichung sind in Fig. 4 einzelne Gruppen durch Zahlen 1, 2, 3, ... gekennzeichnet. In jedem mit einer Ziffer versehenen Quadrat ist hierbei ein Oberflächenelement 18 angeordnet. Die einzelnen Oberflächenelemente 18 einer Oberflächenelementen-Gruppe weisen insbesondere Oberflächenelemente 18 mit unterschiedlichen Oberflächenstrukturen auf (Fig. 3). Die Oberflächenstruktur variiert insbesondere in ihrer Orientierung bzw. Ausrichtung. Ferner variiert die Oberflächenstruktur in der Höhe bzw. Amplitude der einzelnen Gitter sowie deren Periode.

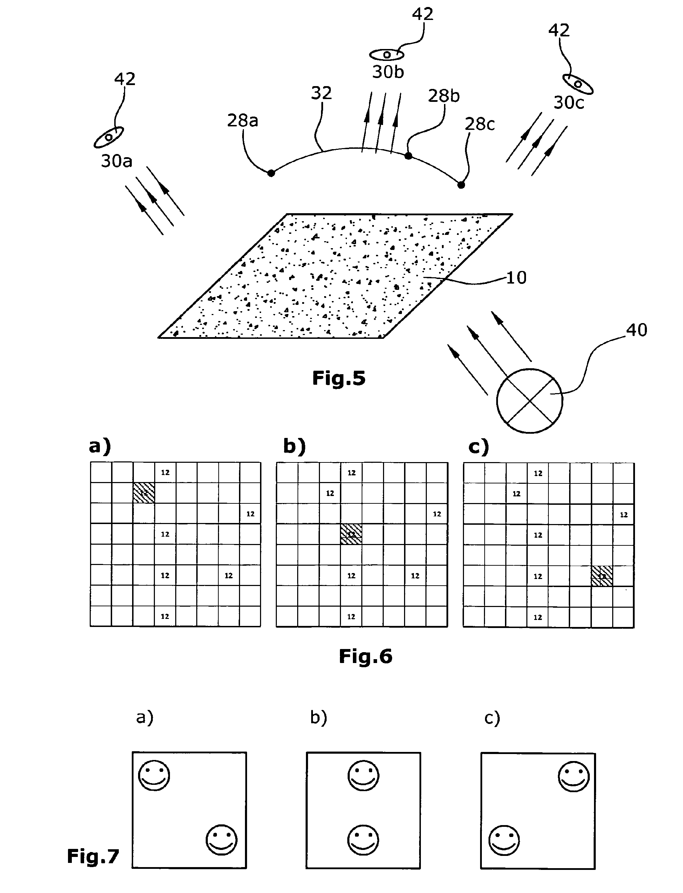

In Fig. 5 ist prinzipiell eine Ausgestaltung einer erfindungsgemäßen Sicherheitseinrichtung dargestellt. Das Trägerelement 10 ist mit einer Vielzahl einzelner Oberflächenelemente 18 versehen, die als unterschiedlich ausgestaltete Punkte dargestellt sind. Einzelne der hier dargestellten Oberflächenelemente sind, wie beispielsweise anhand Fig. 4 ersichtlich, jeweils zu Gruppen zusammengefasst. Durch eine Lichtquelle 40 wird Licht auf eine Rückseite des in diesem Ausführungsbeispiel transparenten Trägerelements 10 geworfen. Zur Überprüfung des Sicherheitselements bzw. um ein Bewegen des Symbols zu erkennen, bewegt sich in diesem Ausführungsbeispiel ein Beobachter 42 aus einer Position 30a in eine Position 30b und aus dieser in eine Position 30c. Die Anzahl und Anordnung der Oberflächenelemente ist so gewählt, dass, wie durch die Linie 32 dargestellt, bei einem kontinuierlichen Ändern des Beobachtungswinkels sich das aus Punkten 28 zusammengesetzte Symbol kontinuierlich bewegt. Diese Bewegung erfolgt für den Beobachter in der in Fig. 5 oberhalb des Trägerelements definierten Beobachtungssphäre. Hierbei ändert sich der Beobachtungswinkel in dem dargestellten Ausführungsbeispiel von dem Beobachtungswinkel 30a über den Beobachtungswinkel 30b zu dem Beobachtungswinkel 30c. Entsprechendes gilt für die Fälle, dass sich der Lichteinfallswinkel kontinuierlich ändert oder dass sich Lichteinfalls- und Beobachtungswinkel gleichzeitig kontinuierlich ändern. Eine gleichzeitige Änderung des Lichteinfalls- und Beobachtungswinkels erfolgt bspw. dann, wenn das Sicherheitselement bzw. das Trägerelement 10 bewegt wird.

In Fig. 6 ist beispielhaft die schematische Darstellung einer einzelnen Gruppe von Oberflächenelementen 18 auf dem Sicherheitselement dargestellt. In Anlehnung an Fig. 4 wurde hierfür beispielhaft die aus sieben Oberflächenelementen bestehende Gruppe "12" ausgewählt. Die Oberflächenelemente sind dabei weiterhin vorzugsweise unregelmäßig auf dem Trägerelement 10 angeordnet und können auch alle unter Anpassung der jeweiligen Parameter (Gitterperiode und Gittervektor) mit anderen, insbesondere auch zu anderen Gruppen gehörenden Oberflächenelementen auf dem Trägerelement 10 die Position tauschen. Zur Darstellung werden die Oberflächenelemente in einer Matrix-Form aufgeführt, wobei in den drei abgebildeten Matrizen jeweils dieselben Oberflächenelemente dargestellt sind. Die drei Matrizen zeigen die Wirkung einer Veränderung der Position eines Beobachters, beispielsweise entsprechend den Beobachtungspositionen 30a, 30b und 30c gemäß Fig. 5, wobei die, für den Beobachter unter dem jeweiligen Beobachtungswinkel sichtbaren Oberflächenelemente, schraffiert dargestellt sind. Es liefert immer eine Teilmenge der gesamten Oberflächenelemente einer Gruppe einen Beitrag zum dargestellten Punkt 28. Somit tragen bei einem bestimmten Beobachtungswinkel nicht alle Oberflächenelemente einer bestimmten Gruppe zur Darstellung eines Punktes bei. Ändert sich die Position des Beobachters und damit der Beobachtungswinkel, ändern sich die zur Darstellung beitragenden Oberflächenelemente. Dabei wird der dargestellte Punkt 28 jedoch weiterhin von Oberflächenelementen derselben Gruppe dargestellt. Bei Veränderung des Beobachtungswinkels wird der Punkt 28 also durch teilweise andere oder vollständig andere Oberflächenelemente derselben Oberflächenelementengruppe dargestellt, wobei die Gesamtzahl der an der Darstellung eines Punktes 28 beteiligten Oberflächenelemente derselben Gruppe variieren kann.

In Fig. 7 ist in vereinfachter Darstellung veranschaulicht wie sich ein Symbol für den Betrachter bewegen kann. Bei einem Beobachtungswinkel 30a erkennt der Betrachter zwei hier als Smileys dargestellte Symbole. Hierbei wird bspw. das Symbol in der linken oberen Ecke durch die Beugung + 1. Ordnung und das Symbol in der rechten unteren Ecke durch die - 1. Ordnung erzeugt. Bewegt sich der Beobachter in die Position 30b (Fig. 5), so bewegt sich das Symbol aus der oberen linken Ecke nach rechts in die Mitte und das Symbol aus der unteren rechten Ecke nach links in die Mitte. In der Position 30c bewegt sich das obere Symbol weiter nach rechts in die obere rechte Ecke und das untere Symbol weiter nach links in die linke Ecke. Der Beobachter sieht somit eine kontinuierliche Bewegung der beiden Symbole.

## Patentansprüche

1. Sicherheitseinrichtung zur Verbesserung der Fälschungssicherheit, von Originalartikeln durch Vorsehen eines Symbols, mit
einer Vielzahl von auf einem Trägerelement (10) angeordneten diffraktiven Oberflächenelementen (18),
wobei jedes einzelne Oberflächenelement (18) eine dreidimensionale Oberflächenstruktur aufweist,
wobei mehrere Oberflächenelemente (18) eine Oberflächenelementen-Gruppe bilden, deren Oberflächenstrukturen und Ausrichtung derart aufeinander abgestimmt sind, dass sie in einem Beobachtungsraum einen Punkt des darzustellenden Symbols (28) abbilden,
wobei mehrere Oberflächenelementen-Gruppen vorgesehen sind, die jeweils einen Punkt abbilden,
wobei sich das darzustellende Symbol (28) aus der Summe aller von den Oberfilächenelementen-Gruppen dargestellten Punkte zusammensetzt und
wobei durch die Veränderung des Einfallswinkels des Lichts und/oder des Beobachtungswinkels von einem Beobachter eine Bewegung des Symbols in dem Beobachtungsraum wahrgenommen wird.

2. Sicherheitseinrichtung nach Anspruch 1, **dadurch gekennzeichnet, dass** durch die gleichförmige Veränderung des Einfallswinkels des Lichtes und / oder des Beobachtungswinkels eine für den Beobachter kontinuierliche Bewegung des Symbols in dem Beobachtungsraum wahrgenommen wird.

3. Sicherheitseinrichtung nach Anspruch 2, **dadurch gekennzeichnet, dass** sich bei konstanter Veränderung des Einfallswinkels des Lichts und/oder des Beobachtungswinkels das Symbol auf einer, insbesondere gekrümmten Bahn (32) bewegt.

4. Sicherheitseinrichtung nach einem der Ansprüche 1 - 3, **dadurch gekennzeichnet, dass** nur diejenigen Oberflächenelemente (18) an der Darstellung des für den Beobachter sichtbaren Symbols beteiligt sind, die sich entlang einer Blickrichtung des Beobachters aus der Projektion des Fokuspunktes in der Bildebene in die Fläche der Sicherheitseinrichtung ergeben.

5. Sicherheitseinrichtung nach einem der Ansprüche 1 - 4, **dadurch gekennzeichnet, dass** durch die Veränderung des Einfallswinkels des Lichts und/oder des Beobachtungswinkels für den Beobachter ein Symbol sichtbar wird, das durch teilweise oder vollständig andere Oberflächenelemente (18) derselben Gruppe dargestellt wird.

6. Sicherheitseinrichtung nach einem der Ansprüche 1 - 5, **dadurch gekennzeichnet, dass** die Oberflächenelemente (18) unregelmäßig auf dem Trägerelement (10) angeordnet sind.

7. Sicherheitseinrichtung nach einem der Ansprüche 1 -6, **dadurch gekennzeichnet, dass** die Oberflächenelemente (18) derart ausgebildet und/ oder angeordnet sind, dass von weniger als 10%, insbesondere von weniger als 5% das sichtbare Symbol (28) erzeugt wird.

8. Sicherheitseinrichtung nach einem der Ansprüche 1 -7, **dadurch gekennzeichnet, dass** eine Oberfläche des Trägerelements (10) zu mindestens 10%, insbesondere zu mindestens 30% und besonders bevorzugt zu mindestens 50% mit Oberflächenelementen (18) bedeckt ist.

9. Sicherheitseinrichtung nach einem der Ansprüche 1 - 8, **dadurch gekennzeichnet, dass** die Oberflächenelemente (18) auf ein Trägerelement (10) aufgebracht werden, indem ein Lack auf die Oberfläche (14) eines Trägerelements (10) aufgetragen, die Oberflächenelemente (18) über ein Abformelement strukturiert und danach ausgehärtet werden.

10. Sicherheitseinrichtung nach Anspruch 9, **dadurch gekennzeichnet, dass** die ausgehärtete Lackschicht nach dem Ausformen der Oberflächenelemente (18) eine Dicke von 0,5 - 300 µm, bevorzugt 0,8 - 50 µm, besonders bevorzugt 1 - 10 µm aufweist.

11. Sicherheitseinrichtung nach einem der Ansprüche 1 -8, **dadurch gekennzeichnet, dass** das Trägerelement (10) aus einem thermoplastischen Material besteht und /oder thermoplastisches Material aufweist, in das die Oberflächenelemente (18) über ein Abformelement, bevorzugt mittels Prägeverfahren strukturiert werden.

12. Sicherheitseinrichtung nach einem der Ansprüche 1 - 11, **dadurch gekennzeichnet, dass** diese mindestens eine lichtreflektierende Schicht aufweist, wobei eine lichtreflektierende Schicht bevorzugt auf die Oberflächenelemente (18) oder die Unterseite (12) des Trägerelementes (10) aufgebracht ist, wobei die lichtreflektierende Schicht, vorzugsweise ein Metall, bevorzugt Aluminium, Silber, Kupfer, Gold oder Chrom aufweist.

13. Sicherheitseinrichtung nach einem der Ansprüche 1 - 12, **dadurch gekennzeichnet, dass** eine mehrfache Abbildung des Symbols (28) derart erfolgt, dass für einen Beobachter eine Auswahl von Abbildungen des Symbols (28) sichtbar ist.

14. Sicherheitseinrichtung nach Anspruch13, **dadurch gekennzeichnet, dass** im Falle mehrerer sichtbarer Abbildungen des Symbols (28), eine Auswahl von Abbildungen, bevorzugt zwei Abbildungen in ihrer Lichtintensität besonders hervorgehoben sind, insbesondere derart hervorgehoben sind, dass für den Beobachter ein perspektivischer Effekt sichtbar ist.

15. Sicherheitseinrichtung nach einem der Ansprüche 1 -14, **dadurch gekennzeichnet, dass** im Falle mehrerer sichtbarer Abbildungen des Symbols (28), nur eine Abbildung in ihrer Lichtintensität besonders hervorgehoben ist.

16. Sicherheitseinrichtung nach einem der Ansprüche 1 -15, **dadurch gekennzeichnet, dass** die Oberflächenstruktur der einzelnen Oberflächenelemente (18) als diffraktives Element ausgebildet ist, wobei diese vorzugsweise in ihrer Amplitude und/ oder ihrem Gitterabstand und/ oder ihrer Orientierung unterschiedlich ist.

17. Sicherheitseinrichtung nach einem der Ansprüche 1 -16, **dadurch gekennzeichnet, dass** die gleichzeitig angewendeten Gitterkonstanten der Oberflächenstrukturen bevorzugt zwischen ≤ 500nm und ≥ 1500nm, besonders bevorzugt zwischen ≤ 300nm und ≥ 5000nm liegen.

18. Sicherheitseinrichtung nach einem der Ansprüche 1 -17, **dadurch gekennzeichnet, dass** das Größenverhältnis der Größten zu der Kleinsten der gleichzeitig angewendeten Gitterkonstanten der Oberflächenstrukturen mindestens 3:1, bevorzugt mindestens 10:1 beträgt.

19. Sicherheitseinrichtung nach einem der Ansprüche 1 -18, **dadurch gekennzeichnet, dass** die Oberflächenelemente (18) und/ oder das Trägerelement (10) farbige, lumineszierende und/ oder phosphoreszierende Pigmente enthalten und/oder maschinenlesbar ausgeführt ist.

20. Sicherheitseinrichtung nach einem der Ansprüche 1 -19, **dadurch gekennzeichnet, dass** diese mit anderen Sicherheitsmerkmalen, bevorzugt mit diffraktiven, refraktiven, reflektiven, farbigen, lumineszierenden und/ oder phosphoreszierenden Merkmalen kombiniert ist.

21. Sicherheitseinrichtung nach Anspruch20, **dadurch gekennzeichnet, dass** andere diffraktive Merkmale mit der Sicherheitseinrichtung nach einem der Ansprüche 1 - 19 mittels eines gemeinsamen Abformelementes erzeugt werden.

22. Wertdokument (oder Sicherheitsdokument), insbesondere Banknote, mit einer Sicherheitseinrichtung nach einem der vorstehenden Ansprüche.

23. Verfahren zur Herstellung einer Sicherheitseinrichtung durch Vorsehen eines Symbols mit den Schritten:
Generieren digitaler Informationen zur Ausgestaltung dreidimensionaler Oberflächenstrukturen auf einer Vielzahl von Oberflächenelementen (18) durch
Bilden von Oberflächenelementen-Gruppen aus mehreren Oberflächenelementen (18),
aufeinander Abstimmen der Oberflächenstrukturen und Ausrichtung der Oberflächenelementen-Gruppen derart, dass sie in einer Beobachtungsraum einen Punkt des darzustellenden Symbols (28) abbilden,
Einrichten mehrerer Oberflächenelementen-Gruppen derart, dass diese jeweils einen Punkt abbilden so dass sich das darzustellende Symbol (28) aus der Summe aller von den Oberflächenelementen-Gruppen dargestellten Punkte derart zusammensetzt, dass durch die Veränderung des Einfallswinkels des Lichts und/oder des Beobachtungswinkels von einem Beobachter eine Bewegung des Symbols in dem Beobachtungsraum wahrgenommen wird und
Anordnen der Vielzahl von diffraktiven Oberflächenelementen (18) mit dreidimensionalen Oberflächenstrukturen auf einem Trägerelement (10).

24. Verfahren zur Herstellung eines Wertdokuments oder Sicherheitsdokuments umfassend: Herstellen einer Sicherheitseinrichtung gemäß Anspruch 23 und Anordnen der Sicherheitseinrichtung auf dem Wertdokument oder Sicherheitsdokument.

## Claims

1. A security device for improving the security against forgery of original articles by the provision of a symbol comprising
a plurality of diffractive surface elements (18) arranged on a carrier element (10), wherein each individual surface element (18) has a three-dimensional surface structure,
wherein a plurality of surface elements (18) form a surface element group whose surface structures and orientation are so matched to each other that in an observation space they form the image of a point of the symbol (28) to be represented,
wherein there are provided a plurality of surface element groups which respectively form the image of a point,
wherein the symbol (28) to be represented is composed of the sum of all points represented by the surface element groups, and
wherein a change of the angle of incidence of the light and/or the observation angle leads to a movement of the symbol in the observation space being perceived by an observer.

2. A security device according to claim 1 **characterized in that** by virtue of the uniform change in the angle of incidence of the light and/or the observation angle a movement of the symbol which is continuous for the observer is perceived in the observation space.

3. A security device according to claim 2 **characterized in that** upon a constant change in the angle of incidence of the light and/or the observation angle the symbol moves on an in particular curved path (32).

4. A security device according to one of claims 1 to 3 **characterized in that** only those surface elements (18) are visible which are produced along a viewing direction of the observer from the projection of the focal point in the image plane into the surface of the security device.

5. A security device according to one of claims 1 to 4 **characterized in that** by virtue of the change in the angle of incidence of the light and/or the observation angle for the observer partly or completely different surface elements (18) of the same group become visible.

6. A security device according to one of claims 1 to 5 **characterized in that** the surface elements (18) are arranged irregularly on the carrier element (10).

7. A security device according to one of claims 1 to 6 **characterized in that** the surface elements (18) are of such a configuration and/or arrangement that the visible symbol (28) is produced by fewer than 10%, in particular by fewer than 5%.

8. A security device according to one of claims 1 to 7 **characterized in that** a surface of the carrier element (10) is covered with surface elements (18) to at least 10%, in particular at least 30% and particularly preferably at least 50%.

9. A security device according to one of claims 1 to 8 **characterized in that** the surface elements (18) are applied to a carrier element (10) by a procedure whereby a lacquer is applied to the surface (14) of a carrier element (10), the surface elements (18) are structured by way of a shaping element and are thereafter hardened.

10. A security device according to claim 9 **characterized in that** after the operation of shaping the surface elements (18) the hardened lacquer layer is of a thickness of 0.5 to 300 µm, preferably 0.8 to 50 µm, particularly preferably 1 to 10 µm.

11. A security device according to one of claims 1 to 8 **characterized in that** the carrier element (10) comprises a thermoplastic material and/or has thermoplastic material into which the surface elements (18) are structured by means of a shaping element, preferably by means of embossing methods.

12. A security device according to one of claims 1 to 11 **characterized in that** it has at least one light-reflecting layer, wherein a light-reflecting layer is preferably applied to the surface elements (18) or the underside (12) of the carrier element (10), the light-reflecting layer preferably having a metal, preferably aluminium, silver, copper, gold or chromium.

13. A security device according to one of claims 1 to 12 **characterized in that** multiple imaging of the symbol (28) is effected in such a way that a selection of images of the symbol (28) is visible for an observer.

14. A security device according to claim 13 **characterized in that** in the case of a plurality of visible images of the symbol (28) a selection of images, preferably two images, are particularly emphasized in respect of their light intensity, in particular are emphasized in such a way that a perspective effect is visible to the observer.

15. A security device according to one of claims 1 to 14 **characterized in that** in the case of a plurality of visible images of the symbol (28) only one image is particularly emphasized in respect of its light intensity.

16. A security device according to one of claims 1 to 15 **characterized in that** the surface structure of the individual surface elements (18) is in the form of a diffractive element, wherein it is preferably different in respect of its amplitude and/or its grating spacing and/or its orientation.

17. A security device according to one of claims 1 to 16 **characterized in that** the simultaneously applied grating constants of the surface structures are preferably between ≤ 500 nm and ≥ 1500 nm, particularly preferably between ≤ 300 nm and ≥ 5000 nm.

18. A security device according to one of claims 1 to 17 **characterized in that** the size relationship of the largest to the smallest of the simultaneously applied grating constants of the surface structures is at least 3:1, preferably at least 10:1.

19. A security device according to one of claims 1 to 18 **characterized in that** the surface elements (18) and/or the carrier element (10) contain colored, luminescent and/or phosphorescent pigments and/or are adapted to be machine-readable.

20. A security device according to one of claims 1 to 19 **characterized in that** it is combined with other security features, preferably with diffractive, refractive, reflective, colored, luminescent and/or phosphorescent features.

21. A security device according to claim 20 **characterized in that** other diffractive features are produced with the security device according to one of claims 1 to 19 by means of a common shaping element.

22. A value document (or security document), in particular a banknote, having a security device according to one of the preceding claims.

23. A process for production of a security device by provision of a symbol comprising the steps:
generating digital information relating to the configuration of three-dimensional surface structures on a plurality of surface elements (18) by
forming surface element groups comprising a plurality of surface elements (18),
mutually matching the surface structures and orientation of the surface element groups in such a way that in an observation sphere they form the image of a point of the symbol (28) to be represented,
setting up a plurality of surface element groups in such a way that they respectively form the image of a point so that the symbol (28) to be represented is composed of the sum of all points represented by the surface element groups in such a way that a change of the angle of incidence of the light and/or the observation angle leads to a movement of the symbol in the observation space being perceived by an observer, and
arranging the plurality of diffractive surface elements (18) with three-dimensional surface structures on a carrier element (10).

24. A process for the production of a value document or security document including:
producing a security device according to claim 23 and arranging the security device on the value document or security document.

## Revendications

1. Dispositif de sécurité permettant d'améliorer la sécurité anti-falsification d'articles originaux par la présence d'un symbole, comportant
une pluralité d'éléments superficiels (18) diffractifs, disposés sur un élément de support (10),
chaque élément superficiel (18) ayant une structure de surface tridimensionnelle,
plusieurs éléments superficiels (18) formant un groupe d'éléments superficiels, dont les structures de surface et l'orientation sont ajustées entre elles de telle sorte qu'elles reproduisent dans un espace d'observation un point du symbole (28) à représenter,
plusieurs groupes d'éléments superficiels étant prévus, lesquels reproduisent chacun un point,
le symbole (28) à représenter étant constitué de la somme de tous les points représentés par les groupe d'éléments superficiels, et
sous l'effet de la variation de l'angle de projection de la lumière et/ou de l'angle d'observation, un observateur distingue un mouvement du symbole dans l'espace d'observation.

2. Dispositif de sécurité selon la revendication 1, **caractérisé en ce que** sous l'effet de la variation uniforme de l'angle de projection de la lumière et/ou de l'angle d'observation, l'observateur distingue un mouvement continu du symbole dans l'espace d'observation.

3. Dispositif de sécurité selon la revendication 2, **caractérisé en ce que** pendant une variation constante de l'angle de projection de la lumière et/ou de l'angle d'observation, le symbole se déplace sur une trajectoire (32), en particulier courbe.

4. Dispositif de sécurité selon l'une quelconque des revendications 1 à 3, **caractérisé en ce que** seuls les éléments superficiels (18) qui apparaissent de la projection du point focal dans le plan de l'image dans la surface du dispositif de sécurité le long d'une direction d'observation de l'observateur, participent à la représentation du symbole visible par l'observateur.

5. Dispositif de sécurité selon l'une quelconque des revendications 1 à 4, **caractérisé en ce que** sous l'effet de la variation de l'angle de projection de la lumière et/ou de l'angle d'observation, l'observateur peut distinguer un symbole qui est représenté par des éléments superficiels (18) partiellement ou totalement différents du même groupe.

6. Dispositif de sécurité selon l'une quelconque des revendications 1 à 5, **caractérisé en ce que** les éléments superficiels (18) sont disposés irrégulièrement sur l'élément de support (10).

7. Dispositif de sécurité selon l'une quelconque des revendications 1 à 6, **caractérisé en ce que** les éléments superficiels (18) sont configurés et/ou disposés de telle sorte que le symbole (28) visible est généré par moins de 10 %, en particulier moins de 5 % de ceux-ci.

8. Dispositif de sécurité selon l'une quelconque des revendications 1 à 7, **caractérisé en ce qu'**une surface de l'élément de support (10) est recouverte par les éléments superficiels (18) sur au moins 10 %, en particulier sur au moins 30 % et de préférence sur au moins 50 %.

9. Dispositif de sécurité selon l'une quelconque des revendications 1 à 8, **caractérisé en ce que** les éléments superficiels (18) sont appliqués sur un élément de support (10) du fait qu'un vernis est appliqué sur la surface (14) d'un élément de support (10), que les éléments superficiels (18) sont structurés par un élément de formage et sont durcis ensuite.

10. Dispositif de sécurité selon la revendication 9, **caractérisé en ce que** la couche de vernis durcie après le formage des éléments superficiels (18) a une épaisseur de 0,5 à 300 µm, de préférence 0,8 à 50 µm, encore mieux de 1 à 10 µm.

11. Dispositif de sécurité selon l'une quelconque des revendications 1 à 8, **caractérisé en ce que** l'élément de support (10) est réalisé dans un matériau thermoplastique et/ou contient un matériau thermoplastique, dans lequel les éléments superficiels (18) sont structurés par un élément de formage, de préférence par un procédé d'estampage.

12. Dispositif de sécurité selon l'une quelconque des revendications 1 à 11, **caractérisé en ce que** ledit dispositif comporte au moins une couche réfléchissant la lumière, une couche réfléchissant la lumière étant appliquée de préférence sur les éléments superficiels (18) ou sur la face inférieure (12) de l'élément de support (10), la couche réfléchissant la lumière comportant de préférence un métal, de préférence de l'aluminium, de l'argent, du cuivre, de l'or ou du chrome.

13. Dispositif de sécurité selon l'une quelconque des revendications 1 à 12, **caractérisé en ce qu'**une reproduction répétée du symbole (28) est réalisée de telle sorte qu'un observateur peut distinguer une sélection de reproductions du symbole (28).

14. Dispositif de sécurité selon la revendication 13, **caractérisé en ce que**, en présence de plusieurs reproductions visibles du symbole (28), une sélection de reproductions, de préférence deux reproductions, sont particulièrement mises en évidence par leur intensité lumineuse, en particulier elles sont mises en évidence de telle sorte qu'un effet de perspective est visible par l'observateur.

15. Dispositif de sécurité selon l'une quelconque des revendications 1 à 14, **caractérisé en ce que**, en présence de plusieurs reproductions visibles du symbole (28), seule une reproduction est particulièrement mise en évidence par son intensité lumineuse.

16. Dispositif de sécurité selon l'une quelconque des revendications 1 à 15, **caractérisé en ce que** la structure de surface des différents éléments superficiels (18) est réalisée sous la forme d'un élément diffractif, ladite structure de surface étant différente, de préférence, par son amplitude et/ou sa distance réticulaire et/ou son orientation.

17. Dispositif de sécurité selon l'une quelconque des revendications 1 à 16, **caractérisé en ce que** les constantes de réseau, appliquées simultanément, des structures de surface se situent de préférence entre ≤ 500 nm et ≥ 1500 nm, encore mieux entre ≤ 300 nm et ≥ 5000 nm.

18. Dispositif de sécurité selon l'une quelconque des revendications 1 à 17, **caractérisé en ce que** le rapport entre les constantes de réseau les plus grandes et les plus petites, appliquées simultanément, des structures de surface est au moins égal à 3:1, de préférence au moins égal à 10:1.

19. Dispositif de sécurité selon l'une quelconque des revendications 1 à 18, **caractérisé en ce que** les éléments superficiels (18) et/ou l'élément de support (10) contiennent des pigments colorés, luminescents et/ou phosphorescents et/ou sont réalisés pour pouvoir être lus par une machine.

20. Dispositif de sécurité selon l'une quelconque des revendications 1 à 19, **caractérisé en ce que** ledit dispositif est combiné à d'autres attributs de sécurité, de préférence à des attributs diffractifs, réfractifs, réflectifs, colorés, luminescents et/ou phosphorescents.

21. Dispositif de sécurité selon la revendication 20, **caractérisé en ce que** d'autres attributs diffractifs peuvent être générés conjointement avec le dispositif de sécurité selon l'une des revendications 1 à 19 au moyen d'un élément de formage commun.

22. Document de valeur (ou document de sécurité), en particulier billet de banque, comportant un dispositif de sécurité selon l'une des revendications précédentes.

23. Procédé pour la réalisation d'un dispositif de sécurité qui prévoit la présence d'un symbole, comportant les étapes :
la génération d'informations numériques pour la configuration de structures de surface tridimensionnelles sur une pluralité d'éléments superficiels (18) au moyen de
la formation de groupes d'éléments superficiels constitués de plusieurs éléments superficiels (18),
l'ajustement des structures de surface entre elles et l'orientation des groupes d'éléments superficiels, de telle sorte qu'ils reproduisent dans un espace d'observation un point du symbole (28) à représenter,
mise en place de plusieurs groupes d'éléments superficiels de telle sorte que ceux-ci reproduisent chacun un point, de telle sorte que le symbole (28) à représenter est constitué de la somme de tous les points représentés par les groupes d'éléments superficiels, de telle sorte que, sous l'effet de la variation de l'angle de projection de la lumière et/ou de l'angle d'observation, un observateur distingue un mouvement du symbole dans l'espace d'observation,
agencement de la pluralité d'éléments superficiels (18) diffractifs avec des structures de surface tridimensionnelles sur un élément de support (10).

24. Procédé pour la fabrication d'un document de valeur ou document de sécurité, comportant : la fabrication d'un dispositif de sécurité selon la revendication 23 et l'agencement du dispositif de sécurité sur le document de valeur ou document de sécurité.
